# EUROPÄISCHE PATENTSCHRIFT

(11) **EP 0 419 960 B1**
(45) Veröffentlichungstag und Bekanntmachung des Hinweises auf die Patenterteilung: **03.07.1996**
(21) Anmeldenummer: 90117688.3
(22) Anmeldetag: 13.09.1990
(51) Int. Cl.: H04Q 11/04, H04M 3/24

(54) **Schaltungsanordnung zur Prüfung von Teilen einer digitalen Zeitmultiplex-Fernmeldevermittlungsstelle, insbesondere Fernsprechvermittlungsstelle**
Circuit for testing parts of a digital time-multiplexed telecommunications exchange, especially telephone exchange
Circuit pour tester des parties d'un commutateur de télécommunications, en particulier de téléphonie

(30) Priorität: 29.09.1989 DE 3932682
(43) Veröffentlichungstag der Anmeldung: 03.04.1991
(73) Patentinhaber: SIEMENS AKTIENGESELLSCHAFT, D-80333 München (DE)
(72) Erfinder: Kucera, Walter, Ing., A-1232 Wien (AT); Nagler, Werner, Dipl.-Ing., D-8021 Schäftlarn (DE); Tiwald, Eckhard, Dipl.-Ing., A-1030 Wien (AT)

(56) Entgegenhaltungen:
- EP-A- 0 012 642
- WO-A-86/05054
- DE-A- 398 041
- DE-A- 3 932 700
- GB-A- 2 066 623
- US-A- 4 730 302
- PATENT ABSTRACTS OF JAPAN vol. 10, no. 297 (E-444)(2353) 9. Oktober 1986 & JP-A-61 113 332
- PATENT ABSTRACTS OF JAPAN vol. 9, no. 89 (E-309)(1812) 18. April 1985 & JP-A-59 219 060
- TELEFON REPORT SIEMENS. Bd. 9, Nr. 3, Mai 1986, MUNCHEN DE Seiten 181 - 185; E. HAENSEL ET AL.: 'Sprechwege-Prüfprogramm für das digitale Koppelnetz macht EWSD sicherer.'

## Beschreibung

Die Erfindung betrifft eine Schaltungsanordnung zur Prüfung von Teilen einer digitalen Zeitmultiplex-Fernmeldevermittlungsstelle, insbesondere Fernsprechvermittlungsstelle, mit einem Prüfwortgenerator zur Erzeugung von Prüfwörtern, die in bestimmten Zeitkanälen durch die betreffenden Teile der Vermittlungsstelle gesendet und nach einer Spiegelung an den Sendeeort zurückübertragen werden, wo sie mittels einer Empfangsschaltung durch einen Vergleich auf Übereinstimmung mit dem ausgesendeten Prüfwort überwacht werden.

Eine Prüfung in Form der Aussendung eines Prüfwortes und Übertragung desselben zu einem Empfangsort mit anschließender Rück-spiegelung zum Sendeort und darauffolgendem Vergleich auf Übereinstimmung ist für sich z.B. aus TELECOM REPORT SIEMENS, Bd. 9, Nr. 3, Mai 1986, München DE, Seiten 181 bis 185 bekannt.

Prüfungen, die nach dem erwähnten Prinzip ablaufen, können sich durch den Teil der Vermittlungsstelle, deren Überwachung sie dienen, zum anderen aber auch der Zielrichtung nach unterscheiden. So kann sich eine Prüfung, deren Zielrichtung es ist, die vermittlungstechnischen Prozeduren der Vermittlungsstelle zu überprüfen, bei einer Vermittlungsstelle, bei der Anschlußgruppen mit einem Gruppenkoppelfeld gebildet sind, zwischen denen eine Verbindung über ein gedoppeltes zentrales Koppelfeld möglich ist, auf ein Gruppenkoppelfeld oder auf den einen oder den anderen Teil des gedoppelten zentralen Koppelfeldes beziehen. Solche der Überprüfung der vermittlungstechnischen Prozeduren dienende Prüfungen werden jeweils durchgeführt, nachdem die Einstellvorgänge für eine bestimmte Verbindung abgeschlossen sind, bevor dann die Durchschaltung vorgenommen wird.

Neben Prüfungen mit dieser Zielrichtung, die in für die Durchschaltung von Verbindungen vorgesehenen Zeitkanälen durchführbar sein müssen, kommen Prüfungen in Frage, die bestimmte Baugruppen innerhalb der Vermittlungsstelle, beispielsweise Multiplexer oder Schnittstellen betreffen, und zu deren Durchführung ein bestimmter fester Zeitkanal reserviert ist. Eine andere Art von Prüfung ist in Fällen einer Gliederung der Vermittlungsstelle in aktive und redundante Anschlußgruppen in Form von Kanaldauertests vorgesehen. Sie werden bei den jeweils redundanten Anschlußgruppen in einem bestimmten Zeitkanal permanent durchgeführt, der für die Durchschaltung einer Verbindung nicht benötigt wird.

Wegen solcher Verschiedenheiten der Prüfungen im Erstreckungsbereich und in der Zielrichtung besteht ein Interesse daran, einzelne Prüfungen parallel zueinander abwickeln zu können. Es ist bisher dabei so vorgegangen worden, daß für jede der unterschiedlichen Prüfschleifen ein gesonderter Prüfempfänger vorgesehen war, durch den die Überwachung des auf der Prüfschleife zurückübertragenen Prüfworts auf Übereinstimmung mit einem ausgesendeten Prüfwort vorgenommen wurde. Eine solche Lösung stellt natürlich für eine größere Anzahl von parallel abzuwickelnden Prüfungen einen beträchtlichen Hardware-Aufwand dar.

Die Aufgabe der Erfindung besteht darin, ein demgegenüber günstigeres Prüfkonzept anzugeben.

Diese Aufgabe wird mit einer Schaltung der eingangs genannten Art gelöst, die die im Kennzeichen des Patentanspruchs 1 angegebenen Merkmale aufweist.

Mit der erfindungsgemäßen Schaltungsanordnung lassen sich bei einer Zeitkanalstruktur mit 128 Zeitkanälen pro Pulsrahmen theoretisch 128 Prüfungen gleichzeitig abwickeln, ohne daß ein erheblicher Mehraufwand gegenüber der Durchführung einer einzigen Prüfung erforderlich ist. Dabei wirkt sich begünstigend aus, daß eine Einrichtung zur Zeitkanalvermittlung, die erforderlich ist, um den erfindungsgemäßen Zeitmultiplexbetrieb der Empfangseinrichtung in geeigneter Weise durchführen zu können, wegen der bisher schon geforderten Möglichkeit, auf sämtlichen Zeitkanälen solche durchzuführen zu können, sowieso schon vorhanden ist.

Die Ausnutzung einer Prüfeinrichtung im Zeitkanalbetrieb geht für sich aus EP-A-0 012 642 hervor, wo der Durchgang durch Vermittlungseinrichtungen dadurch geprüft wird, daß die eingespeisten Informationen mit den daraufhin an den Ausgangsleitungen auftretenden Signalen verglichen werden.

Es wird demnach eine solche Zeitkanalvermittlungseinheit gemäß einer Ausgestaltung der Erfindung dazu ausgenutzt, nach einer Spiegelung wieder an den Empfangsort gelangte Prüfwörter in die Zeitlage des Zeitkanals umzusetzen, der auf der zu der Empfangseinrichtung führenden Empfangsmultiplexleitung der betreffenden Prüfung zugeordnet ist.

Gemäß einer weiteren Ausgestaltung der Erfindung weist die Empfangsschaltung ferner ei nen gemeinsamen Fehlerzähler, durch den während eines bitseriellen Vergleichs wiederholt festgestellte Bitfehler gezählt werden, bevor eine Einspeicherung in den Schreib-Lese-Speicher erfolgt, sowie einen Addierer auf, durch den die dem jeweiligen Zählerstand entsprechenden Datenworte zu den schon im Schreib-Lese-Speicher befindlichen Datenworten addiert werden. Es ist damit die Möglichkeit eröffnet, eine Fehlerschwelle vorzugeben, und das Erreichen dieser Fehlerschwelle erkennen zu können.

Noch eine andere Ausgestaltung der Erfindung geht dahin, eine Schnittstelle vorzusehen, über die ein Mikroprozessor asynchron auf den Inhalt der Speicherzellen zugreifen kann. Es wird hiermit der unterschiedlichen Zielrichtung der einzelnen Prüfungen Rechnung getragen.

Nachstehend wird die Erfindung anhand eines Ausführungsbeispieles unter Bezugnahme auf eine Zeichnung näher erläutert, die ein Blockschaltbild der erfindungsgemäßen Schaltungsanordnung zeigt.

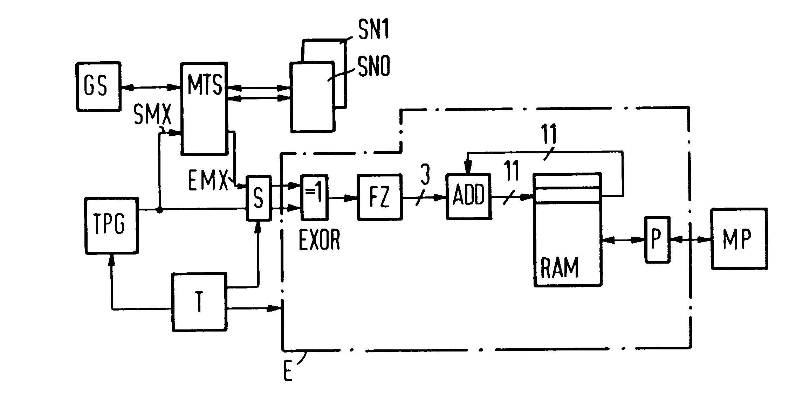

In der Figur sind als Teile einer digitalen Zeitmultiplex-Fernsprechvermittlungsstelle ein Gruppenkoppler GS, der Bestandteil einer Anschlußgruppe für den Anschluß von Teilnehmern und/oder Verbindungsleitungen ist, sowie die Teile SN0 und SN1 eines gedoppelten zentralen Koppelfeldes angedeutet, über das eine Verbindung zwischen an verschiedene solcher Anschlußgruppen angeschlossenen Leitungen erfolgt.

Die Figur zeigt ferner einen Prüfwortgenerator TPG zur Erzeugung von Prüfwörtern. In der Praxis ist dieser Prüfwortgenerator in Form eines 4-Bit-Binärzählers realisiert, der demnach 16 verschiedene Bitkombinationen zu liefern vermag. Ein Prüfwort besteht bei dem geschilderten Beispiel jedoch aus acht Bit, wo bei vier dieser acht Bit die jeweils invertierten Werte der vom Prüfwortgenerator gelieferten Bits darstellen. Der Prüfwortgenerator wird nach 8 ms weitergeschaltet, wogegen alle 4 ms eine Invertierung des 8-Bit-Prüfworts stattfindet. Die Schaltperiode des Prüfwortgenerators von 8 ms entspricht der Länge eines 32 Pulsrahmen umfassenden Überrahmens, wobei ein Pulsrahmen jeweils die Zeitspannen von 128 Zeitkanälen enthält.

Die vom Prüfwortgenerator erzeugten Prüfwörter werden auf einer Sendemultiplexleitung SMX an eine Zeitkanalvermittlungseinheit MTS geliefert, durch die eine Zeitkanalumsetzung auf den Zeitkanal bewirkt wird, der bei der Prüfung benutzt werden soll und der den Weg zu dem zu prüfenden Teil der Vermittlungsstelle also entweder zu dem Gruppenkoppler GS oder zu dem zentralen Koppelfeld SN0, SN1 festlegt. Nach Durchlaufen eines betreffenden Teils der Vermittlungsstelle und einer Spiegelung werden die Prüfwörter wieder an die Zeitkanalvermittlungseinheit MTS zurückübertragen und durch diese auf eine Empfangsmultiplexleitung EMX in einen Zeitkanal vermittelt, der auf dieser Empfangsmultiplexleitung der betreffenden Prüfung, also beispielsweise der Prüfung der Vermittlungstechnik bei einer Vermittlung über den erwähnten Gruppenkoppler GS zugeordnet ist.

Bei den geschilderten Zeitverhältnissen können auf der Empfangsmultiplexleitung EMX 128 Zeitkanäle gebildet sein. Die Empfangsmultiplexleitung EMX führt zu einer Empfangsschaltung E.

Diese Empfangsschaltung ist zur Durchführung einer Mehrzahl parallel ablaufender Prüfungen im Zeitmultiplexbetrieb ausgelegt. Sie weist einen für sämtliche Prüfungen gemeinsam ausgenutzten Vergleicher in Form eines Exclusiv-Oder-Gliedes EXOR auf, an dessen einen Eingang die nach einer Spiegelung zurückübertragenen und durch die Zeitkanalvermittlungseinheit MTS in den betreffenden Zeitkanal umgesetzten und auf der Empfangsmultiplexleitung EMX angelieferten Prüfwörter gelangen und dessen anderem Eingang das entsprechende vom Prüfwortgenerator aus direkt zugelieferte Prüfwort zugeführt wird. Der Vergleicher führt einen bitseriellen Vergleich durch.

Um die Laufzeiten zu berücksichtigen, die beim Durchlaufen der zu prüfenden Teile der Vermittlungsstelle verstreichen, werden die zurückübertragenen Prüfmuster empfangsseitig erst nach einer Wartezeit ausgewertet, die größer ist als die maximal zu erwartende Laufzeit. Hierzu wird mittels eines Sperrgliedes S der Zugang zu der Empfangsschaltung E jeweils für die Dauer von 2 ms nach Aussenden eines Prüfwortes gesperrt.
- Das Sperrglied steht genauso wie der Prüfwortgenerator und einzelne Bestandteile des Empfängers E unter dem Einfluß einer Taktsteuerung T.

Weiterer Bestandteil des Empfängers E ist ein Fehlerzähler FZ zum Zählen der bei den Vergleichen festgestellten Bitfehler eines Prüfwortes,der bis zu acht Bit zu zählen vermag.

Die Empfangsschaltung weist ferner einen Schreib-Lese-Speicher RAM auf, in dem in den einzelnen Prüfungen individuell zugeordneten Speicherzellen Angaben über die Ergebnisse der Prüfung, nämlich Angaben über die Zählerstände des Fehlerzählers FZ gespeichert werden. Die Eingabe dieser Angaben erfolgt über einen Addierer ADD, der die Fehlerzählerstände zu den zugehörigen schon im Schreib-Lese-Speicher RAM befindlichen Fehlerzählerständen addiert.

Die Auswertung der Inhalte der Speicherzellen des Schreib-Lese-Speichers RAM, also insbesondere eine Schwellenbewertung übernimmt ein Mikroprozessor MP, der über eine Prozessorschnittstelle P asynchronen Zugriff zu den Speicherzellen hat. Im Falle eines Überlaufs einer Speicherzelle des Schreib-LeseSpeichers wird diese gegen einen weiteren Schreibzugriff gesperrt, bis der Mikroprozessor den Speicherzelleninhalt gelesen hat, um die Vortäuschung eines falschen Ergebnisses zu vermeiden.

## Patentansprüche

1. Schaltungsanordnung zur Prüfung von Teilen einer digitalen Zeitmultiplex-Fernmeldevermittlungsstelle, insbesondere Fernsprechvermittlungsstelle, mit einem Prüfwortgenerator zur Erzeugung von Prüfwörtern, bei der die in bestimmten Zeitkanälen durch die betreffenden Teile der Vermittlungsstelle gesendet und nach einer Spiegelung an den Sendeort zurückübertragen werden, wo sie mittels einer Empfangsschaltung durch einen Vergleich auf Übereinstimmung mit dem ausgesendeten Prüfwort überwacht werden,
**dadurch gekennzeichnet**,
daß die Empfangsschaltung (E) derart ausgestaltet ist, daß diese zur Durchführung einer Mehrzahl unterschiedlicher, parallel ablaufender Prüfungen im Zeitmultiplexbetrieb ausgenutzt ist, wozu sie an eine Empfangsmultiplexleitung (EMX) angeschlossen ist, auf der die nach der genannten Spiegelung zurückübertragenen Prüfwörter in den einzelnen Prüfungen zugeordneten Zeitkanälen auftreten, daß die Empfangsschaltung ferner einen für alle Prüfungen gemeinsamen zeitkanalweise betriebenen Vergleicher (EXOR), sowie einen Schreib-Lese-Speicher (RAM) aufweist, in dem in den einzelnen zugeordneten Speicherzellen Angaben über bei den Vergleichen festgestellte Übereinstimmungsfehler abspeicherbar sind.

2. Schaltungsanordnung nach Anspruch 1,
**daurch gekenzeichnet, daß**
der Vergleicher (EXOR) einen bitweisen Vergleich vornimmt.

3. Schaltungsanordnung nach einem der vorhergehenden Ansprüche,
**dadurch gekennzeichnet**,
daß die Empfangsschaltung (E) ferner einen gemeinsamen Fehlerzähler, durch den die während eines Vergleichs festgestellten Bitfehler gezählt werden bevor eine Einspeicherung in den Schreib-Lese-Speicher (RAM) erfolgt, sowie einen Addierer (ADD) aufweist, durch den die dem jeweiligen Zählerstand entsprechenden Datenworte zu den schon im Schreib-Lese-Speicher (RAM) befindlichen Datenworten addiert werden.

4. Schaltungsanordnung nach einem der vorhergehenden Ansprüche,
**gekennzeichnet durch**
eine Schnittstelle (P), über die ein Mikroprozessor (MP) asynchron auf den Inhalt der Speicherzellen zugreifen kann.

5. Schaltungsanordnung nach einem der vorhergehenden Ansprüche,
**dadurch gekennzeichnet,**
daß der Empfangsschaltung (E) ein durch eine Taktsteuerung (T) gesteuertes Sperrglied (S) vorgeschaltet ist, das zu Beginn einer Prüfung die Weitergabe zurückübertragener Prüfwörter an die Empfangsschaltung bis zum Ablauf einer Einschwingzeit und im Zuge einer Prüfung jeweils bis zum Ablauf der längstens zu erwartenden Laufzeit unterbindet.

## Claims

1. Circuit arrangement for testing parts of a digital time-division multiplex telecommunication exchange, preferably telephone exchange, having a checkword generator for the generation of check words, which are transmitted in certain time slots through the relevant parts of the exchange and, after mirroring, are transmitted back to the sending station, where they are monitored by means of a receiving circuit by a comparison for matching the transmitted check word, characterized in that the receiving circuit (E) is designed in such a way that it is used for carrying out a plurality of different, concurrent tests in time-division multiplex operation, for which purpose the said receiving circuit is connected to a receiving multiplex line (EMX), on which the check words transmitted back after the said mirroring occur in time slots assigned to the individual tests, in that the receiving circuit has, furthermore, a comparator (EXOR), which is shared by all the tests and is operated on a time slot basis, and also a random-access memory (RAM), in which information on matching errors established in the comparisons can be stored in the individual assigned memory cells.

2. Circuit arrangement according to Claim 1, characterized in that the comparator (EXOR) performs a bit-by-bit comparison.

3. Circuit arrangement according to one of the preceding claims, characterized in that the receiving circuit (E) has, furthermore, a common error counter, by which the bit errors established during a comparison are counted before a storage in the random-access memory (RAM), and also an adder (ADD) by which the data words corresponding to the respective counter reading are added to the data words already located in the random-access memory (RAM).

4. Circuit arrangement according to one of the preceding claims, characterized by an interface (P), via which a microprocessor (MP) can asynchronously access the content of the memory cells.

5. Circuit arrangement according to one of the preceding claims, characterized in that the receiving circuit (E) is preceded by an inhibitor (S), which is controlled by a clock control (T) and at the beginning of a test suppresses the forwarding of transmitted-back check words to the receiving circuit until the expiry of a transient time and in the course of a test in each case until the expiry of the longest transit time to be anticipated.

## Revendications

1. Montage d'essai de parties d'un central numérique de télécommunication à multiplexage temporel, notamment d'un central téléphonique, comportant un générateur de mots d'essai destiné à la production de mots d'essai, montage dans lequel ils sont émis dans des canaux temporels déterminés par les parties concernées du central et sont transmis en retour, après une réflexion, au lieu d'émission, où leur concordance avec le mot d'essai émis est contrôlée au moyen d'un circuit de réception par une comparaison,
caractérisé en ce que
le circuit (E) de réception est tel qu'il est exploité pour mettre en oeuvre en fonctionnement de multiplexage temporel une pluralité d'essais différents se déroulant en parallèle, il est connecté à cet effet à une ligne (EMX) à multiplexage de réception, sur laquelle les mots d'essai transmis en retour après ladite réflexion apparaissent dans des canaux temporels associés aux divers essais, le circuit de réception comporte en outre un comparateur (EXOR) fonctionnant par canal temporel et commun à tous les essais, ainsi qu'une mémoire (RAM) vive, dans laquelle des indications d'erreurs de concordance constatées lors des comparaisons peuvent être mémorisées dans les diverses cellules de mémoire associées.

2. Montage suivant la revendication 1,
caractérisé en ce que
le comparateur (EXOR) procède à une comparaison par bit.

3. Montage suivant l'une des revendications précédentes,
caractérisé en ce que
le circuit (E) de réception comporte en outre un compteur commun d'erreurs, par lequel les erreurs de bits constatées pendant une comparaison sont comptées avant que s'effectue une mémorisation dans la mémoire (RAM) vive, ainsi qu'un additionneur (ADD), par lequel les mots de données correspondant à l'état considéré du compteur sont additionnés aux mots de données se trouvant déjà dans la mémoire (RAM) vive.

4. Montage suivant l'une des revendications précédentes,
caractérisé par
une interface (P), par laquelle un microprocesseur (MP) peut accéder de manière asynchrone au contenu des cellules de mémoire.

5. Montage suivant l'une des revendications précédentes,
caractérisé en ce que
il est branché en amont du circuit (E) de réception un élément (S) de blocage, qui est commandé par une commande (T) de cadence et qui interdit, au début d'un essai, la retransmission au circuit de réception de mots d'essai transmis en retour jusqu'à ce que soit écoulé un temps d'établissement et qui l'interdit au cours d'un essai jusqu'à ce que soit écoulé le temps de marche le plus long auquel il faut s'attendre.
